# EUROPEAN PATENT APPLICATION

(11) **EP 4 575 997 A1**
(43) Date of publication of application: **25.06.2025**
(21) Application number: 23217696.6
(22) Date of filing: 18.12.2023
(51) Int. Cl.: G06T 11/00

(54) **GENERATING SYNTHETIC IMAGES**

(71) Applicant: Bayer Aktiengesellschaft, 51373 Leverkusen (DE)
(72) Inventor: HOOGE, Jens, 13086 Berlin (DE)
(74) Representative: BIP Patents

(57) **Abstract**

Systems, methods, and computer programs disclosed herein relate to training a machine learning model and using the trained machine learning model to generate synthetic images, preferably synthetic medical images.

## Description

### FIELD OF THE DISCLOSURE

Systems, methods, and computer programs disclosed herein relate to training a machine learning model and using the trained machine learning model to generate synthetic images, preferably synthetic medical images.

### BACKGROUND

Artificial intelligence is increasingly finding its way into medicine. Machine learning models are being used not only to recognize signs of disease in medical images of the human or animal body (see, for example, WO2018202541A1, WO2020229152A1), but also increasingly to generate synthetic (artificial) medical images.

For example, WO2019/074938A1 and WO2022184297A1 describe methods for generating an artificial radiologic image showing an examination region of an examination object after application of a standard amount of a contrast agent, although only a smaller amount of contrast agent than the standard amount was applied. The standard amount is the amount recommended by the manufacturer and/or distributor of the contrast agent and/or the amount approved by a regulatory authority and/or the amount listed in a package insert for the contrast agent. The methods described in WO2019/074938A1 and WO2022184297A1 can therefore be used to reduce the amount of contrast agent.

For example, WO2021052896A1 and WO2021069338A1 describe methods for generating an artificial medical image showing an examination region of an examination object in a first time period. The artificial medical image is generated using a trained machine learning model based on medical images showing the examination region in a second time period. The method can be used, for example, to speed up radiological examinations. Instead of measuring radiological images over a longer period of time, radiological images are measured only within a part of the time period and one or more radiological images are predicted for the remaining part of the time period using the trained model.

For example, US11170543B2B2 and US11181598B2 describe methods for MRI image reconstruction from undersampled data using machine learning models.

For example, WO2016/175755A1 and WO2014/036473A1 describe methods for generating a high radiation dose CT image based on a low radiation dose CT image using machine learning models.

The methods and models described in the aforementioned publications are suitable for generating synthetic two-dimensional (2D) images. Each synthetic two-dimensional (2D) image is generated based on one or more measured two-dimensional (2D) images.

The methods and models described in the aforementioned publications can also be used to generate synthetic three-dimensional (3D) images: individual 2D images of a stack of measured 2D images can be sequentially fed to the trained models, which then generate individual synthetic 2D images that can be combined to form a stack of synthetic 2D images and/or a synthetic 3D image.

However, the number of 2D images in a stack of 2D images is not always the same for different examination objects. Depending on the selected slice thickness and the size of the scanned volume, the number of 2D images forming a stack can vary greatly. The varying number of images in a stack makes it difficult to train a machine learning model and use the trained model to generate synthetic images.

### SUMMARY

The present disclosure addresses this problem. The independent claims disclose means for efficiently generating stacks of synthetic 2D images. Preferred embodiments of the present disclosure are found in the dependent patent claims, in the present description and in the drawings.

Thus, in a first aspect, the present disclosure relates to a computer-implemented method of training a machine learning model to generate synthetic images, the method comprising:
- providing a machine learning model, wherein the machine learning model is configured to generate a synthetic 2D image based on input data and parameters of the machine learning model,
- providing training data, wherein the training data comprises, for each examination object of a plurality of examination objects, (i) input data and (ii) target data,
   ∘ wherein the input data comprises one or more stacks of 2D images, wherein each stack represents a 3D examination region of the examination object, wherein each 2D image represents a slice of the 3D examination region,
   ∘ wherein the target data comprises a stack of 2D target images, wherein the stack represents the 3D examination region of the examination object, wherein each 2D target image represents a slice of the 3D examination region,
- training the machine learning model, wherein the training comprises, for each examination object of the plurality of examination objects:
   ∘ unordered selecting a slice of the 3D examination region,
   ∘ inputting the 2D images of the input data representing the selected slice into the machine learning model,
   ∘ receiving a synthetic 2D image representing the selected slice as an output of the machine learning model,
   ∘ reducing deviations between the synthetic 2D image and the 2D target image representing the selected slice by modifying model parameters,
   ∘ repeating the above training steps until synthetic 2D images have been generated for a pre-defined portion of the 3D examination region,
- outputting and/or storing the trained machine learning model and/or transferring the trained machine learning model to a separate computer and/or using the trained machine learning model to generate one or more synthetic medical images of one or more new examination objects.

In another aspect, the present disclosure provides a computer system comprising:
a processor; and
a storage medium that stores an application program configured to perform an operation when executed by the processor, said operation comprising the steps of:
   - providing a machine learning model, wherein the machine learning model is configured to generate a synthetic 2D image based on input data and parameters of the machine learning model,
   - providing training data, wherein the training data comprises, for each examination object of a plurality of examination objects, (i) input data and (ii) target data,
      ∘ wherein the input data comprises one or more stacks of 2D images, wherein each stack represents a 3D examination region of the examination object, wherein each 2D image represents a slice of the 3D examination region,
      ∘ wherein the target data comprises a stack of 2D target images, wherein the stack represents the 3D examination region of the examination object, wherein each 2D target image represents a slice of the 3D examination region,
   - training the machine learning model, wherein the training comprises, for each examination object of the plurality of examination objects:
      ∘ unordered selecting a slice of the 3D examination region,
      ∘ inputting the 2D images of the input data representing the selected slice into the machine learning model,
      ∘ receiving a synthetic 2D image representing the selected slice as an output of the machine learning model,
      ∘ reducing deviations between the synthetic 2D image and the 2D target image representing the selected slice by modifying model parameters,
      ∘ repeating the above training steps until synthetic 2D images have been generated for a pre-defined portion of the 3D examination region,
   - outputting and/or storing the trained machine learning model and/or transferring the trained machine learning model to a separate computer and/or using the trained machine learning model to generate one or more synthetic medical images of one or more new examination objects.

In another aspect, the present disclosure provides a non-transitory computer readable storage medium having stored thereon software instructions that, when executed by a processor of a computer system, cause the computer system to execute the following steps:
- providing a machine learning model, wherein the machine learning model is configured to generate a synthetic 2D image based on input data and parameters of the machine learning model,
- providing training data, wherein the training data comprises, for each examination object of a plurality of examination objects, (i) input data and (ii) target data,
   ∘ wherein the input data comprises one or more stacks of 2D images, wherein each stack represents a 3D examination region of the examination object, wherein each 2D image represents a slice of the 3D examination region,
   ∘ wherein the target data comprises a stack of 2D target images, wherein the stack represents the 3D examination region of the examination object, wherein each 2D target image represents a slice of the 3D examination region,
- training the machine learning model, wherein the training comprises, for each examination object of the plurality of examination objects:
   ∘ unordered selecting a slice of the 3D examination region,
   ∘ inputting the 2D images of the input data representing the selected slice into the machine learning model,
   ∘ receiving a synthetic 2D image representing the selected slice as an output of the machine learning model,
   ∘ reducing deviations between the synthetic 2D image and the 2D target image representing the selected slice by modifying model parameters,
   ∘ repeating the above training steps until synthetic 2D images have been generated for a pre-defined portion of the 3D examination region,
- outputting and/or storing the trained machine learning model and/or transferring the trained machine learning model to a separate computer and/or using the trained machine learning model to generate one or more synthetic medical images of one or more new examination objects.

### BRIEF DESCRIPTION OF THE DRAWINGS

Fig. 1 shows an exemplary and schematic embodiment of the computer-implemented method for training a machine learning model.
Fig. 2 shows an exemplary and schematic embodiment of the computer-implemented method for generating one or more synthetic images using a trained machine learning model.
Fig. 3 shows another exemplary and schematic embodiment of the computer-implemented method for training a machine learning model.
Fig. 4 shows another exemplary and schematic embodiment of the computer-implemented method for generating one or more synthetic images using a trained machine learning model.
Fig. 5 shows schematically in the form of a flow chart a preferred embodiment of the computer-implemented method for training the machine learning model of the present disclosure.
Fig. 6 shows schematically in the form of a flow chart a preferred embodiment of the computer-implemented method for generating one or more synthetic images.
Fig. 7 shows by way of example and in schematic form a computer system according to the present disclosure.
Fig. 8 shows by way of example and in schematic form a further embodiment of the computer system.

### DETAILED DESCRIPTION

The subject matters of the present disclosure will be more particularly elucidated below, without distinguishing between the subject matters (method, computer system, storage medium). Rather, the elucidations that follow are intended to apply by analogy to all subject matters, irrespective of the context (method, computer system, storage medium) in which they occur.

Where steps are stated in an order in the present description or in the claims, this does not necessarily mean that this disclosure is limited to the order stated. Instead, it is conceivable that the steps are also executed in a different order or else in parallel with one another, the exception being when one step builds on another step, thereby making it imperative that the step building on the previous step be executed next (which will however become clear in the individual case). The stated orders thus constitute preferred embodiments.

Some implementations of the present disclosure will be described more fully hereinafter with reference to the accompanying drawings, in which some, but not all implementations of the disclosure are shown. Indeed, various implementations of the disclosure may be embodied in many different forms and should not be construed as limited to the implementations set forth herein; rather, these example implementations are provided so that this disclosure will be thorough and complete, and will fully convey the scope of the disclosure to those skilled in the art.

Unless defined otherwise, all technical and scientific terms used herein have the same meaning as commonly understood by one of ordinary skill in the art.

As used herein, the articles "a" and "an" are intended to include one or more items and may be used interchangeably with "one or more" and "at least one." As used in the description and the claims, the singular form of "a", "an", and "the" include plural referents, unless the context clearly dictates otherwise. Where only one item is intended, the term "one" or similar language is used. Also, as used herein, the terms "has", "have", "having", or the like are intended to be open-ended terms. Further, the phrase "based on" is intended to mean "based at least partially on" unless explicitly stated otherwise.

The present disclosure provides means for generating a stack of synthetic images.

The term "synthetic" means that the image is not the result of a physical measurement on a real object under examination, but that the image has been generated by a machine learning model. A synonym for the term "synthetic" is the term "artificial". A synthetic image may however be based on one or more measured images, i.e., the machine learning model may be able to generate the synthetic image based on one or more measured images (and/or other/further data).

A "stack of images" represents a three-dimensional (3D) volume in an examination object. Each image of the stack represents a layer in the three-dimensional (3D) volume of the examination object. Such a layer is also referred to as a "slice" in this disclosure. The three-dimensional volume is also referred to as the "examination region" in this disclosure.

Slices of a stack are usually (but necessarily) planar and arranged parallel to each other.

Slices can be parallel or perpendicular to an anatomical plane. An "anatomical plane" refers to an imaginary flat surface or section used as a reference to visualize and study the internal structures of the human body. These anatomical planes are useful for describing the location of organs, bones, blood vessels, and other structures within the body. They provide a standardized reference system for medical imaging, surgical procedures, and anatomical studies, facilitating clear communication and accurate interpretation of anatomical relationships.

There are three primary anatomical planes commonly used:
The "sagittal plane" divides the body into left and right portions. It runs longitudinally from front to back, creating a side view. The "midsagittal plane" (or median plane) is a specific sagittal plane that divides the body into equal left and right halves.

The "frontal plane", also known as the "coronal plane", divides the body into front (anterior) and back (posterior) portions. It runs vertically from side to side, creating a front or back view.

The "transverse plane", also called the "horizontal plane" or "axial plane", divides the body into upper (superior) and lower (inferior) portions. It runs horizontally, perpendicular to the sagittal and frontal planes, creating a top or bottom view.

Slices can therefore be parallel to the sagittal plane, to the frontal plane or to the transverse plane. But they can also be oriented differently.

It should be noted that the machine learning model of the present invention can be trained using training data in which the slices are arranged differently for different examination objects.

The "examination object" is preferably a living being, more preferably a mammal, most preferably a human.

The "examination region" is a part of the examination object, for example an organ or part of an organ or a plurality of organs or another part of the examination object.

For example, the examination region may be a liver, kidney, heart, lung, brain, stomach, bladder, prostate, intestine, thyroid, eye, breast or a part of said parts or another part of the body of a mammal (for example a human).

In one embodiment, the examination region includes a liver or part of a liver or the examination region is a liver or part of a liver of a mammal, preferably a human.

In a further embodiment, the examination region includes a brain or part of a brain or the examination region is a brain or part of a brain of a mammal, preferably a human.

In a further embodiment, the examination region includes a heart or part of a heart or the examination region is a heart or part of a heart of a mammal, preferably a human.

In a further embodiment, the examination region includes a thorax or part of a thorax or the examination region is a thorax or part of a thorax of a mammal, preferably a human.

In a further embodiment, the examination region includes a stomach or part of a stomach or the examination region is a stomach or part of a stomach of a mammal, preferably a human.

In a further embodiment, the examination region includes a pancreas or part of a pancreas or the examination region is a pancreas or part of a pancreas of a mammal, preferably a human.

In a further embodiment, the examination region includes a kidney or part of a kidney or the examination region is a kidney or part of a kidney of a mammal, preferably a human.

In a further embodiment, the examination region includes one or both lungs or part of a lung of a mammal, preferably a human.

In a further embodiment, the examination region includes a thyroid or part of a thyroid of a mammal, preferably a human.

In a further embodiment, the examination region includes an eye or part of an eye of a mammal, preferably a human.

In a further embodiment, the examination region includes a breast or part of a breast or the examination region is a breast or part of a breast of a female mammal, preferably a female human.

In a further embodiment, the examination region includes a prostate or part of a prostate or the examination region is a prostate or part of a prostate of a male mammal, preferably a male human.

The term "image" as used herein means preferably a data structure that represents a spatial distribution of a physical signal. The spatial distribution may be of any shape, for example forming a grid and thereby defining pixels or voxels, the grid being possibly irregular or regular. The physical signal may be any signal, for example proton density, tissue echogenicity, tissue radiolucency, measurements related to the blood flow, information of rotating hydrogen nuclei in a magnetic field, color, level of gray, depth, surface or volume occupancy, such that the image may be a 2D RGB/grayscale/depth image. An image is usually composed of discrete image elements (pixels).

The present invention is described in this disclosure predominantly using the example of images representing an examination region of an examination object in real space. However, it should be noted that the present invention can also be applied to representations of an examination region in other spaces, for example, representations of the examination region in frequency space or projection space. In this respect, the term "image" is to be interpreted broadly.

The "real space" is the three-dimensional Euclidean space, which corresponds to the space that we humans experience with our senses and in which we move. A representation in real space is therefore the more familiar representation for humans.

In a representation in real space, the examination region is usually represented by a plurality of image elements, which may for example be in a raster arrangement in which each image element represents a part of the examination region, wherein each image element may be assigned a colour value or grey value. The colour value or grey value represents a signal intensity, for example the attenuation of X-rays.

In a representation in frequency space, the examination region is represented by a superposition of fundamental vibrations. For example, the examination region may be represented by a sum of sine and cosine functions having different amplitudes, frequencies, and phases. The amplitudes and phases may be plotted as a function of the frequencies, for example, in a two- or three-dimensional plot. Usually, the lowest frequency (origin) is placed in the centre. The further away from this centre, the higher the frequencies. Each frequency can be assigned an amplitude representing the frequency in the frequency-space representation and a phase indicating the extent to which the respective vibration is shifted towards a sine or cosine vibration. The k-space data produced by MRI is an example of a representation in frequency space.

A representation in real space can for example be converted (transformed) by a Fourier transform into a representation in frequency space. Conversely, a representation in frequency space can for example be converted (transformed) by an inverse Fourier transform into a representation in real space.

Details about real-space depictions and frequency-space depictions and their respective interconversion are described in numerous publications, see for example https://see .stanford.edu/materials/lsoftaee261/book-fall-07.pdf.

A representation of an examination region in the projection space is usually the result of a computed tomography examination prior to image reconstruction. In other words: the raw data obtained in the computed tomography examination can be understood as a projection-space representation. In computed tomography, the intensity or attenuation of X-radiation as it passes through the examination object is measured. From this, projection values can be calculated. In a second step, the object information encoded by the projection is transformed into an image (e.g., a real-space representation) through a computer-aided reconstruction. The reconstruction can be effected with the Radon transform. The Radon transform describes the link between the unknown examination object and its associated projections.

Details about the transformation of projection data into a real-space representation are described in numerous publications, see for example K. Catch: The Radon Transformation and Its Application in Tomography, Journal of Physics Conference Series 1903(1):012066.

Preferably the synthetic image is a synthetic medical image.

A "medical image" is a preferably visual representation of the human body or a part thereof or a visual representation of the body of an animal or a part thereof. Medical images can be used, e.g., for diagnostic and/or treatment purposes.

Techniques for generating medical images include X-ray radiography, computerized tomography, fluoroscopy, magnetic resonance imaging, ultrasonography, endoscopy, elastography, tactile imaging, thermography, microscopy, positron emission tomography, optical coherence tomography, fundus photography, and others.

Examples of medical images include CT (computer tomography) scans, X-ray images, MRI (magnetic resonance imaging) scans, PET (positron emission tomography) scans, fluorescein angiography images, OCT (optical coherence tomography) scans, histological images, ultrasound images, fundus images and/or others.

In an embodiment of the present disclosure, the medical image is a radiologic image. "Radiology" is the branch of medicine concerned with the application of electromagnetic radiation and mechanical waves (including, for example, ultrasound diagnostics) for diagnostic, therapeutic and/or scientific purposes. In addition to X-rays, other ionizing radiation such as gamma rays or electrons are also used. Since a primary purpose is imaging, other imaging procedures such as sonography and magnetic resonance imaging (MRI) are also included in radiology, although no ionizing radiation is used in these procedures. Thus, the term "radiology" as used in the present disclosure includes, in particular, the following examination procedures: computed tomography, magnetic resonance imaging, sonography, positron emission tomography.

The radiologic image can be, e.g., a 2D or 3D CT scan or MRI scan. The radiologic image may be a representation of an examination region generated with or without a contrast agent.

"Contrast agents" are substances or mixtures of substances that improve the depiction of structures and functions of the body in radiological examinations.

In computed tomography, iodine-containing solutions are usually used as contrast agents. In magnetic resonance imaging (MRI), superparamagnetic substances (for example iron oxide nanoparticles, superparamagnetic iron-platinum particles (SIPPs)) or paramagnetic substances (for example gadolinium chelates, manganese chelates, hafnium chelates) are usually used as contrast agents. In the case of sonography, liquids containing gas-filled microbubbles are usually administered intravenously. Examples of contrast agents can be found in the literature (see for example A.S.L. Jascinth et al.: Contrast Agents in computed tomography: A Review, Journal of Applied Dental and Medical Sciences, 2016, vol. 2, issue 2, 143-149; H. Lusic et al.: X-ray-Computed Tomography Contrast Agents, Chem. Rev. 2013, 113, 3, 1641-1666; https://www.radiology.wisc.edu/wp-content/uploads/2017/10/contrast-agents-tutorial.pdf, M.R. Nouh et al.: Radiographic and magnetic resonances contrast agents: Essentials and tips for safe practices, World J Radiol. 2017 Sep. 28; 9(9): 339-349; L.C. Abonyi et al.: Intravascular Contrast Media in Radiography: Historical Development & Review of Risk Factors for Adverse Reactions, South American Journal of Clinical Research, 2016, vol. 3, issue 1, 1-10; ACR Manual on Contrast Media, 2020, ISBN: 978-1-55903-012-0; A. Ignee et al.: Ultrasound contrast agents, Endosc Ultrasound. 2016 Nov-Dec; 5(6): 355-362).

The synthetic image is generated with the help of a trained machine learning model.

Such a "machine learning model", as used herein, may be understood as a computer implemented data processing architecture. The machine learning model can receive input data and provide output data based on that input data and on parameters of the machine learning model (model parameters). The machine learning model can learn a relation between input data and output data through training. In training, parameters of the machine learning model may be adjusted in order to provide a desired output for a given input.

The process of training a machine learning model involves providing a machine learning algorithm (that is the learning algorithm) with training data to learn from. The term "trained machine learning model" refers to the model artifact that is created by the training process. The training data must contain the correct answer, which is referred to as the target. The learning algorithm finds patterns in the training data that map input data to the target, and it outputs a trained machine learning model that captures these patterns.

In the training process, input data are inputted into the machine learning model and the machine learning model generates an output. The output is compared with the (known) target. Parameters of the machine learning model are modified in order to reduce the deviations between the output and the (known) target to a (defined) minimum.

In general, a loss function can be used for training, where the loss function can quantify the deviations between the output and the target.

The aim of the training process can be to modify (adjust) parameters of the machine learning model in order to reduce the loss to a (defined) minimum.

In the case of the present disclosure, a machine learning model is trained to generate synthetic images.

In a first step, the machine learning model is provided.

The machine learning model is configured to generate a synthetic image based on input data and parameters of the machine learning model.

The machine learning model can be or include an artificial neural network.

An "artificial neural network" (ANN) is a biologically inspired computational model. An ANN usually comprises at least three layers of processing elements: a first layer with input neurons (nodes), a k^{th} layer with output neurons, and k-2 inner layers, where k is a natural number greater than 2.

In such a network, the input neurons serve to receive the input data. If the input data constitute or comprise an n-dimensional vector (e.g., a feature vector), with n being an integer equal to or greater than 1, there is usually one input neuron for each component of the vector. If the input data constitute or comprise an image, there is usually one input neuron for each colour/greyscale channel of each image element. The output neurons serve to output a synthetic image. The processing elements of the layers are interconnected in a predetermined pattern with predetermined connection weights therebetween. Each network node represents a pre-defined calculation of the weighted sum of inputs from prior nodes and a non-linear output function. The combined calculation of the network nodes relates the inputs to the outputs. It should be noted that an ANN can also comprise connection biases.

The machine learning model can be or comprise a convolutional neural network (CNN). A "CNN" is a class of deep neural networks, most commonly applied to processing images. A CNN comprises an input layer with input neurons, an output layer with output neurons, as well as multiple hidden layers between the input layer and the output layer.

The nodes in the CNN input layer are usually organized into a set of "filters" (feature detectors), and the output of each set of filters is propagated to nodes in successive layers of the network. The computations for a CNN include applying the convolution mathematical operation to each filter to produce the output of that filter. Convolution is a specialized kind of mathematical operation performed by two functions to produce a third function that is a modified version of one of the two original functions. In convolutional network terminology, the first function to the convolution can be referred to as the input, while the second function can be referred to as the convolution kernel. The output may be referred to as the feature map. For example, the input to a convolution layer can be a multidimensional array of data that defines the various colour/greyscale components of an input image. The convolution kernel can be a multidimensional array of parameters, where the parameters are adapted by the training process for the neural network.

The objective of the convolution operation is to extract features (such as, e.g., edges from an input image). Conventionally, the first convolutional layer is responsible for capturing the low-level features such as edges, colour, gradient orientation, etc. With added layers, the architecture adapts to the high-level features as well, giving a network which has the wholesome understanding of images in the dataset. Similar to the convolutional layer, the pooling layer is responsible for reducing the spatial size of the feature maps. It is useful for extracting dominant features with some degree of rotational and positional invariance, thus maintaining the process of effectively training of the model. Adding a fully-connected layer is a way of learning non-linear combinations of the high-level features as represented by the output of the convolutional part.

The machine learning model can have an autoencoder architecture.

An "autoencoder" is a type of neural network that is often used for unsupervised learning and dimensionality reduction. An autoencoder is designed to learn a compressed representation (encoding) of the input data and subsequently reconstruct (decode) the original input as accurately as possible or generate an output derived from the input data.

An autoencoder usually consists of two main components: the encoder and the decoder. The encoder maps the input data to a lower-dimensional space, typically referred to as the latent space or bottleneck. The dimensionality of this latent space is usually smaller than the dimensionality of the input data, effectively compressing the information. The decoder then reconstructs the original input from the encoded representation using another neural network, mirroring the encoder's structure. However, the decoder can also be used to generate a different output from the encoded representation, e.g., a synthetic image.

The machine learning model can have a U-Net architecture.

U-Net refers to a convolutional neural network (CNN) architecture that was introduced by Ronneberger *et al.* in 2015 (see, e.g., O. Ronneberger et al.: U-Net: Convolutional Networks for Biomedical Image Segmentation, arXiv:1505.04597v1).

The U-Net architecture is notable for its symmetric and U-shaped structure, which inspired its name. It is designed to capture both local and global information while maintaining fine-grained spatial resolution. The U-Net architecture typically consists of two main parts: the contracting path (encoder) and the expansive path (decoder). The contracting path in the U-Net architecture resembles a traditional CNN, where each layer consists of convolutional and pooling operations. As the name suggests, this part of the network is responsible for capturing the low-level and high-level features, gradually reducing the spatial resolution and increasing the number of feature channels.

The expansive path in the U-Net architecture, which is the decoder part, performs a series of upscaling operations to gradually restore the spatial resolution of the encoded features. The upsampling is typically achieved using transpose convolutions or other upsampling techniques. Additionally, at each layer in the expansive path, skip connections are used to concatenate feature maps from the corresponding layer in the contracting path. These skip connections help in preserving low-level and fine-grained spatial details, aiding in accurate segmentation.

The machine learning model can be or comprise a transformer model.

At the core of such a transformer model is the transformer architecture, which relies heavily on self-attention mechanisms to process sequential data efficiently.

Transformer models use self-attention mechanisms to capture contextual relationships between portions of the input data in a sequence. This enables transformer models to model long-range dependencies effectively, allowing them to produce more accurate predictions.

The transformer architecture consists of two main components: the encoder and the decoder. The encoder processes the input sequence, modeling its contextual relationships, while the decoder generates the output sequence based on the encoded information. Both the encoder and decoder are composed of multiple layers of self-attention mechanisms and feed-forward neural networks. Details about transformers may be found in scientific publication (see, e.g., S. Khan et al.: Transformers in Vision: A Survey, arXiv:2101.01169v5).

The machine learning model is trained on training data. The training data comprises, for each examination object of a plurality of examination objects, (i) input data and (ii) target data.

The term "plurality" as it is used herein means an integer greater than 1, usually greater than 10, preferably greater than 100.

The input data comprises one or more stacks of 2D images. Each stack represents a 3D examination region of the examination object. The examination region is usually the same for each stack; however, each stack usually represents the examination region in a different state and/or at a different time and/or under different measurement conditions and/or as a result of a different measurement method and/or different measurement parameters. Each 2D image represents a slice of the 3D examination region.

The examination region is usually the same for all examination objects; however, it can have a different size. Different examination regions of different examination objects preferably overlap at least partially.

The stacks can have the same size or different sizes for different examination objects. The number of 2D images in a stack can be the same or different for different examination objects. The orientation of the 2D images in a stack can be the same or different for different examination objects. The number of stacks is usually (but not necessarily) the same for all examination objects.

If the input data for an examination object comprises several stacks, these stacks preferably represent the same examination region, and the slices represent the same parts of the examination region.

The target data comprises a stack of 2D target images. The stack represents the same 3D examination region of the examination object as the one or more stacks of the input data; however, the stack of the target data usually represents the examination region in a different state and/or at a different time and/or under different measurement conditions and/or as a result of a different measurement method and/or different measurement parameters than each stack of the input data. Each 2D target image represents a slice of the 3D examination region. For each 2D target image of a stack of an examination object, there is at least one 2D image in the input data that represent the same part (slice) of the examination region of the examination object.

Training of the machine learning model comprises the following steps for each examination object of the plurality of examination objects:
(a) unordered selecting a slice of the 3D examination region of the examination object,
(b) inputting the 2D images of the input data representing the selected slice into the machine learning model,
(c) receiving a synthetic 2D image representing the selected slice as an output of the machine learning model,
(d) reducing deviations between the synthetic 2D image and the 2D target image representing the selected slice by modifying model parameters,
(e) repeating steps (a) to (d) until synthetic 2D images have been generated for a pre-defined portion of the 3D examination region.

The training begins with a first examination object. Input data is available for the first examination object. The input data comprises one or more stacks of 2D images, wherein each stack represents a 3D examination region of the first examination object, wherein each 2D image represents a slice of the 3D examination region.

In step (a), a first slice of the 3D examination region is selected. The selection is not ordered (unordered). In other words: the selection is made in no particular order. This means that a slice is selected regardless of which slice was previously selected; the order is arbitrary.

The term "random selection" is also used for such an unordered selection. However, the term "random" should not be understood to mean that all slices are selected with the same probability. It is possible that some slices are selected with a higher probability than others (see below). The term "random" therefore only refers to the order.

"Unordered selection" is therefore to be equated with "selection in random order" or "selection in no particular order".

Each slice of the 3D examination region is represented by at least one 2D image.

If the input data of the first examination object only comprises one stack of 2D images, then there is only one 2D image for each slice that represents this slice. In such a case, "selecting a slice" can also mean: "selecting a 2D image that represents a slice".

If the input data of the first examination object comprises two or more stacks of 2D images, then for each slice of the 3D examination region of the first examination object there is usually (but not necessarily) one 2D image in each stack that represents the slice (it is possible, for example, that there is no 2D image for a slice in a stack). In other words: a slice is represented by several 2D images in different stacks. In such a case, "selecting a slice" can also mean: "selecting all 2D images representing a slice".

In step (b), all 2D images of the input data representing the first selected slice are inputted into the machine learning model. The 2D images can be fed to the machine learning model in stacked form or via different input layers, for example.

The machine learning model is configured to generate a synthetic 2D image based on the input data and model parameters. The synthetic 2D image represents the first selected slice, i.e., the same slice as the one or more 2D images that were fed to the machine learning model.

The synthetic 2D image generated by the machine learning model is received as output from the machine learning model in step (c).

In the next step, the generated synthetic 2D image is compared with the 2D target image that also represents the first selected slice.

A loss function can be used to quantify deviations between the synthetic 2D image and the 2D target image. The loss function can calculate an L2 loss, for example.

In step (d), the deviations are reduced by modifying model parameters. This is usually done by minimizing the loss function in an optimization procedure (e.g., a gradient descent procedure).

Step (e) specifies that the previously performed training steps (a) to (d) are repeated until synthetic 2D images have been generated for a pre-defined portion of the 3D examination region.

If the synthetic 2D images do not yet cover the pre-defined portion of the 3D examination region, another slice (a second slice) is selected from the 3D examination region. The selection is again made in no particular order (unordered).

The training procedure can be carried out in such a way that already selected slices cannot be selected again or that already selected slices can be selected with the same probability as slices that have not yet been selected or that already selected slices can be selected with a different probability (e.g., a lower probability) than slices that have not yet been selected. It is also possible that slices are selected more frequently in certain regions of examination objects than in other regions of examination objects.

All 2D images of the input data representing the second selected slice are inputted into the machine learning model; another synthetic 2D image representing the second selected slice is received as an output of the machine learning model; deviations between the other synthetic 2D image and the 2D target image representing the second selected slice are reduced by modifying model parameters.

The process then starts again. This means that a third slice and a fourth slice, etc. are selected and synthetic 2D images are generated that represent the third slice, the fourth slice and so on.

The process is carried out until synthetic 2D images have been generated for a pre-defined portion of the 3D examination region.

The pre-defined portion can be 100%, for example. This means that all slices that make up the 3D examination region must be selected (at least) once before the process is continued with another examination object. However, the pre-defined portion can also be less than 100%, e.g. 99% or 98% or 97.5% or 93% or 90% or 85.31% or another percentage.

In particular if a slice can be selected more than once in a training cycle when repeating training steps (a) to (d), it may make sense to end the training cycle before all slices have been selected and to continue training with another examination object.

Once synthetic 2D images have been generated for the pre-defined portion of the 3D examination region, the training procedure is continued with a further examination object. The examination objects can also be selected at random / without a particular order. It is possible for examination objects to be selected multiple times.

The training of the machine learning model can be ended when a stop criterion is met. Such a stop criterion can be for example: a predefined maximum number of training steps/cylces/epochs has been performed, deviations between output data and target data can no longer be reduced by modifying the model parameters, a predefined minimum of the loss function is reached, and/or an extreme value (e.g., maximum or minimum) of another performance value is reached.

The trained machine learning model and/or the modified model parameters of the trained machine learning model may be output, stored and/or transmitted to a separate computer system.

The trained machine learning model can be used for inference. "Inference" is understood as the generation of one or more synthetic images of the examination region of a new examination object. The term "new" means that data from the new examination object has usually not already been used when training the machine learning model.

In a first step, new input data are received. The new input data represent the examination region of a new examination object.

The new input data may comprise one or more stacks of 2D images, wherein each stack represents the 3D examination region of the new examination object, wherein each 2D image represents a slice of the 3D examination region.

In a further step, a first slice of the 3D examination region is selected. Slices can be selected in any order. The slice can be selected at random; however, it is also possible for the slices in the stack to be selected and processed one after the other, e.g., from top to bottom or from bottom to top or from left to right or from right to left or according to another pre-defined sequence. If slices are not selected according to a pre-defined sequence (at random), the procedure is preferably carried out in such a way that each slice can only be selected once.

Preferably, the slices are selected according to a pre-defined sequence. Preferably, the pre-defined sequence is designed so that each slice is only selected once.

Each slice of the 3D examination region is represented by at least one 2D image.

If the new input data of the new examination object only comprises one stack of 2D images, then there is only one 2D image for each slice that represents this slice. In such a case, "selecting a slice" can also mean: "selecting a 2D image that represents a slice".

If the new input data of the new examination object comprises two or more stacks of 2D images, then for each slice of the 3D examination region of the new examination object there is usually (but not necessarily) one 2D image in each stack that represents the slice (it is possible, for example, that there is no 2D image for a slice in a stack). In other words: a slice is represented by several 2D images in different stacks. In such a case, "selecting a slice" can also mean: "selecting all 2D images representing a slice".

In a further step, the 2D images of the input data representing the first selected slice are inputted into the trained machine learning model.

The trained machine learning model is configured and trained to generate a synthetic 2D image based on the input data and model parameters. The synthetic 2D image represents the first selected slice, i.e. the same slice as the one or more 2D images that were fed to the machine learning model.

The synthetic 2D image generated by the machine learning model is received as an output from the machine learning model.

In a further step, another slice (a second slice) is selected (unordered or according to a pre-defined sequence). The 2D images representing the second selected slice are fed to the trained machine learning model and the trained machine learning model generates a second synthetic 2D image.

The process continues until all slices have been selected and the synthetic 2D images generated by the trained machine learning model represent the entire 3D examination region.

The generated synthetic 2D images can be output individually (e.g., one after the other) or together (e.g., in the form of a stack) and/or combined to form a synthetic 3D image and output in the form of the synthetic 3D image.

The approach disclosed herein for training a machine learning model has a number of advantages. Training data can be used where the number of slices does not have to be the same for all examination objects. Training data can be used in which the examination regions of different examination objects can differ from each other; for example, they do not all have to be the same size. Training data can be used in which the slices that define the examination region do not have to have the same orientation.

This means that more training data is available and a model can be trained that produces better synthetic images.

It is also possible to use the trained machine learning model to generate individual synthetic 2D images. This means that it is not necessary to generate stacks of synthetic 2D images, even if the machine learning model has been trained based on stacks of 2D images. The trained machine learning model can therefore be used flexibly.

Furthermore, the machine learning model can be trained for a variety of applications, some of which are listed below as examples.

In one embodiment of the present disclosure, the machine learning model is configured and trained to generate synthetic radiologic images representing an examination region of an examination object after application of a second amount of a contrast agent based on radiologic images (and optionally further input data) representing the examination region of the examination object before and/or after application of a first amount of the contrast agent.

The first amount is different from the second amount. The first amount may be less than the second amount, or the first amount may be greater than the second amount. If the first amount is less than the second amount, the method of the present disclosure may be used to reduce the amount of contrast agent in a radiologic examination (see, e.g., WO2019/074938A1, WO2022184297A1). For example, a first stack of radiologic images of the examination region of an examination object may be generated after application of an amount less than the standard amount, and based on these measured radiologic images, a stack of synthetic images of the examination region of the examination object after application of the standard amount may be generated using the trained machine learning model.

The standard amount is the amount recommended by the manufacturer and/or distributor of the contrast agent and/or the amount approved by a regulatory authority and/or the amount listed in a package insert for the contrast agent.

In another embodiment of the present disclosure, the machine learning model is configured and trained to generate synthetic radiologic images representing an examination region of an examination object after application of a second contrast agent based on radiologic images (and optionally further input data) representing the examination region of the examination object before and/or after application of a first contrast agent, wherein the first contrast agent and the second contrast agent are different contrast agents (see, e.g., WO2021197996A1).

In another embodiment of the present disclosure, the machine learning model is configured and trained to generate synthetic high-dose CT images of an examination region of an examination object based on low-dose CT images of the examination region of the examination object. The terms "high-dose" and "low-dose" refer to the radiation dose and have the definitions commonly used in the state of the art (see, e.g., WO2016/175755A1).

In another embodiment of the present disclosure, the machine learning model is configured and trained to generate synthetic medical images of an examination region of an examination object at a first time point based on medical images (and optionally further input data) of the examination region of the examination object at one or more other time points.

For example, the machine learning model may be configured and trained to generate synthetic radiologic images representing an examination region of an examination object at a point in time in a dynamic radiologic examination (e.g., a functional magnetic resonance imaging examination). The synthetic radiologic image may be generated based on measured radiologic images (and optionally further input data) representing the examination region of the examination object at one or more other points in time in the dynamic radiologic examination.

Functional magnetic resonance imaging (fMRI) is a technique used in radiology and neuroscience to measure and map brain activity by detecting changes in blood flow and oxygenation levels. During an fMRI scan, a strong magnetic field and radio waves are used to create images of the brain. By monitoring the changes in blood oxygenation levels, fMRI can indirectly measure neural activity in different regions of the brain. This is based on the principle that increased neural activity in a specific brain area leads to an increased demand for oxygenated blood supply to that region (see, e.g.: Z. Huang et al.: Timescales of Intrinsic BOLD Signal Dynamics and Functional Connectivity in Pharmacologic and Neuropathologic States of Unconsciousness, The Journal of Neuroscience, 2018, 38(9):2304-2317).

For example, the machine learning model can be configured and trained to generate synthetic radiologic images of an examination region of an examination object at a first time point before or after application of a contrast agent based on radiologic images (and optionally further input data) of the examination region of the examination object at one or more other time points before or after the application of the contrast agent. In this context, the invention can be used to shorten the time an examination object has to spend in an MRI scanner. Instead of measuring MRI images over a longer period of time, MRI images are measured only within a part of the time period and one or more MRI images are predicted for the remaining part of the time period using the trained machine learning model (see, e.g. WO2021052896A1 and WO2021069338A1).

In another embodiment of the present disclosure, the machine learning model is configured and trained to generate synthetic medical images of a first modality, based on medical images (and optionally further data as input data) of one or more other modalities. For example, the machine learning model can be configured and trained to generate synthetic CT images of an examination region of an examination object based on MRI images of the examination region of the examination object. For example, the machine learning model can be configured and trained to generate synthetic MRI images of an examination region of an examination object based on CT images of the examination region of the examination object.

In another embodiment of the present disclosure, the machine learning model is configured and trained to generate synthetic medical images according to a first measurement protocol, based on medical images (and optionally further data as input data) according to one or more other measurement protocols. The measurement protocols may be different MRI imaging sequences, for example. For example, the machine learning model can be configured and trained to generate synthetic T1-weighted MRI images of an examination region of an examination object based on T2-weighted MRI images of the examination region of the examination object or *vice versa.* Transformations between other measurement protocols such as diffusion weighted imaging (DWI), fluid attenuated inversion recovery (Flair), proton density (PD), and/or others are also possible.

In another embodiment of the present disclosure, the machine learning model is configured and trained to generate synthetic medical images resulting from applying first measurement parameters based on measured medical images (and optionally further data as input data) resulting from applying second measurement parameters. The second measurement parameters differ from the first measurement parameters. Such a trained machine learning model can be used, for example, to harmonize medical images generated at different locations (sites) and/or under different conditions in order to (better) compare them. In other words, harmonization of scan protocols can be achieved by image-to-image translations between medical images created with different parameters (e.g., repetition time (TR), echo time (TE) in case of MRI images) in multi-site datasets.

It is possible that for training the machine learning model and when using the trained machine learning model to generate synthetic 2D images, additional input data (further input data) is used in addition to the 2D images as input data.

Such additional input data can comprise additional images, such as one or more 2D images adjacent to a 2D input image.

Such additional input data can be information about the examination object, the examination region and/or the (measurement) method used to generate the input data.

If the examination object is a patient, the o additional input data can be or comprise patient data, for example.

Patient data may include, e.g.: demographic data (age, sex, body size (height), body weight, body mass index, ethnicity), resting heart rate, heart rate variability and other data derived from heart rate, glucose concentration in blood and urine, body temperature, impedance (e.g., thoracic impedance), blood pressure (e.g., systolic and/or diastolic arterial peripheral blood pressure), (estimated) glomerular filtration rate, urine albumin-to-creatinine ratio (uACR), blood measurement values (e.g., blood sugar, oxygen saturation, erythrocyte count, hemoglobin content, leukocyte count, platelet count, inflammation values, blood lipids including low-density lipoprotein cholesterol (LDL) and high-density lipoprotein cholesterol (HDL), ions including Na+ and corrected calcium), pre-existing disease(s), genetic background, lifestyle information about the life of the patient, such as consumption of alcohol, smoking, and/or exercise and/or the patient's diet, information about how long the patient has had one or more diseases (e.g., diabetes, hypertension, and/or cardiovascular disease), medical intervention parameters such as regular medication, occasional medication, or other previous or current medical interventions and/or other information about the patient's previous and/or current treatments and/or reported health conditions and/or combinations thereof.

Patient data may include information from an electronic medical record (EMR, also referred to as electronic health record (EHR)). The EMR may contain information about a hospital's or physician's practice where certain treatments were performed and/or certain tests were performed, as well as various other (meta-)information about the patient's treatments, medications, tests, and physical and/or mental health records.

Patient data may include information about a person's condition obtained from the person himself/herself (self-assessment data, (electronic) patient reported outcome data (e)PRO)).

Patient data can be provided by the patient and/or any other person such as a physician and/or a physician assistant. Patient data may be entered into one or more computer systems by said person or persons via input means (such as a keyboard, a touch-sensitive surface, a mouse, a microphone, and/or the like).

Patient data can be captured (e.g., automatically) by one or more sensors, e.g., blood pressure sensor, motion sensor, activity tracker, blood glucose meter, heart rate meter, thermometer, impedance sensor, microphone (e.g., for voice analysis) and/or others.

Patient data can be measured by a laboratory and stored in a data storage by laboratory personnel.

Patient data can be read from one or more data storages.

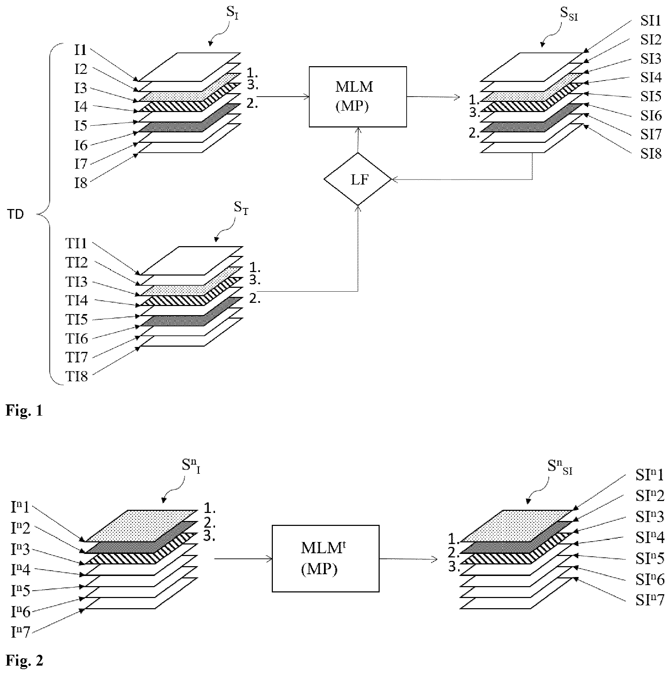

Fig. 1 shows an exemplary and schematic embodiment of the computer-implemented method for training a machine learning model.

The machine learning model MLM shown in Fig. 1 is trained on training data TD. The training data TD comprises, for each examination object of a plurality of examination objects, (i) input data and (ii) target data.

In the example shown in Fig. 1, only one data set of one examination object is shown. This data set comprises one stack (S_{I}) of 2D images as input data, and one stack (S_{T}) of 2D target images as target data.

Each stack (S_{I}, S_{T}) represents the same 3D examination region of the examination object.

In Fig. 1, some images are marked with hatching. However, this only serves to make selected images and corresponding images easier to recognize and has no further restrictive meaning.

The stack S_{I} of the input data comprises a multitude of 2D images (I1, I2, I3, I4, I5, I6, I7, I8). Each image of the multitude of 2D images represents a slice of the 3D examination region of the examination object.

The stack S_{T} of the target data comprises a multitude of 2D target images (TI1, TI2, TI3, TI4, TI5, TI6, TI7, TI8). Each image of the multitude of 2D target images represents a slice of the 3D examination region of the examination object.

The slices represented by the input images of the input data stack S_{I} correspond to the slices represented by the target images of the target data stack S_{T}. For each slice of the input data stack S_{I}, there is a corresponding slice of the target data stack S_{T} and *vice versa.* "Correspond(s)" / "corresponding" means that the respective slices represent the same part of the 3D examination region, but preferably in a different state and/or at a different time and/or under different measurement conditions and/or as a result of a different measurement method and/or different measurement parameters.

The slice represented by I1 corresponds with the slice represented by TI1, the slice represented by I2 corresponds with the slice represented by TI2, the slice represented by I3 corresponds with the slice represented by TI3, the slice represented by I4 corresponds with the slice represented by TI4, the slice represented by I5 corresponds with the slice represented by TI5, the slice represented by I6 corresponds with the slice represented by TI6, the slice represented by I7 corresponds with the slice represented by TI7, the slice represented by I8 corresponds with the slice represented by TI8.

It is also true that for every image of the input data there is a corresponding image of the target data: I1 corresponds with TI1, I2 corresponds with TI2, I3 corresponds with TI3, I4 corresponds with TI4, I5 corresponds with TI5, I6 corresponds with TI6, I7 corresponds with TI7, I8 corresponds with TI8.

In a first step, a first slice of the 3D examination region is selected at random (i.e., there is no particular order).

In the example shown in Fig. 1, the slice represented by the 2D image I3 in the stack S_{I} of the input data and by the 2D target image TI3 in the stack S_{T} of the target data is selected first. One could also have said that in a first step, a 2D image (I3) is selected from the stack S_{I} of the input data together with a corresponding 2D target image (TI3) from the stack S_{T} of the target data.

The 2D image I3 is inputted into machine learning model MLM.

The machine learning model MLM is configured to generate a synthetic 2D image based on input data and parameters MP of the machine learning model MLM. So, the machine learning model MLM generates the synthetic 2D image SI3 based on the 2D image I3 and based on model parameters MP. The synthetic 2D image SI3 represents the same slice of the 3D examination region of the examination object as the 2D image I3 and the corresponding 2D target image TI3.

In a further step, the synthetic 2D image SI3 and the 2D target image TI3 are compared. A loss function LF is used to quantify deviations between the synthetic 2D image SI3 and the 2D target image TI3. Model parameters MP are modified in an optimization procedure to reduce the deviations.

In a further step, a second slice is selected. In the example shown in Fig. 1, the second slice to be selected is the one represented by the 2D image I6 in the stack S_{I} of the input data and by the 2D target image TI6 in the stack S_{T} of the target data. One could also have said that a second 2D image (I6) from the stack (S_{I}) of the input data and a corresponding 2D target image (TI6) from the stack (S_{T}) of the target data are selected.

The 2D image I6 is inputted into machine learning model MLM. The machine learning model MLM generates the synthetic 2D image SI6 based on the 2D image I6 and based on model parameters MP. The synthetic 2D image SI6 represents the same slice of the 3D examination region of the examination object as the 2D image I6 and the corresponding 2D target image TI6. In other words, SI6 corresponds with I6 and TI6.

The synthetic 2D image SI6 and the corresponding 2D target image TI6 are compared. The loss function LF is used to quantify deviations between the synthetic 2D image SI6 and the 2D target image TI6. Model parameters MP are modified in the optimization procedure to reduce the deviations.

In a further step, a third slice is selected. In the example shown in Fig. 1, the third slice to be selected is the one represented by the 2D image I4 in the stack S_{I} of the input data and by the 2D target image TI4 in the stack S_{T} of the target data. One could also have said that a third 2D image (I4) from the stack (S_{I}) of the input data and a corresponding 2D target image (TI4) from the stack (S_{T}) of the target data are selected.

The 2D image I4 is inputted into machine learning model MLM. The machine learning model MLM generates the synthetic 2D image SI4 based on the 2D image I4 and based on model parameters MP. The synthetic 2D image SI4 represents the same slice of the 3D examination region of the examination object as the 2D image I4 and the corresponding 2D target image TI4. In other words, SI4 corresponds with I4 and TI4.

The synthetic 2D image SI4 and the corresponding 2D target image TI4 are compared. The loss function LF is used to quantify deviations between the synthetic 2D image SI4 and the 2D target image TI4. Model parameters MP are modified in the optimization procedure to reduce the deviations.

This process is continued, i.e. another slice is selected and the 2D image of the input data representing the selected slice is fed into the machine learning model MLM.

The process continues until synthetic 2D images have been generated for a pre-defined portion of the examination region. In this case, images I1, I2, I5, I7 and I8 are selected and fed into the MLM machine learning model. However, the order in which the other images are selected is not shown in Fig. 1.

It should be noted that further input data can be used to generate the synthetic 2D images in addition to the 2D images. For example, in addition to the 2D image I3, it is also possible to use one or more images adjacent to the 2D image I3 to generate the synthetic 2D image SI3, for example the 2D image I2 and/or the 2D image I4 and/or the 2D image I1 and/or the 2D image I5.

After the training has been carried out with the training data TD shown in Fig. 1, it can be continued with the training data of another examination object.

Once the machine learning model has been trained on the basis of training data from a plurality of examination objects, the trained machine learning model can be used to generate one or more synthetic images of a new examination object. This is shown schematically as an example in Fig. 2.

Fig. 2 shows an exemplary and schematic embodiment of the computer-implemented method for generating one or more synthetic images using a trained machine learning model.

The trained machine learning model MLM^{t} shown in Fig. 2 may have been trained in a process described with respect to Fig. 1.

The trained machine learning model MLM¹ is fed with 2D images (Iⁿ1, Iⁿ2, Iⁿ3, Iⁿ4, Iⁿ5, Iⁿ6, Iⁿ7) of a new examination object as input data.

The 2D images Iⁿ1, Iⁿ2, Iⁿ3, Iⁿ4, Iⁿ5, Iⁿ6, Iⁿ7 form a stack Sⁿ_{I}. Each 2D image represents a slice in the examination region of the new examination object.

In Fig. 2, some images are marked with hatching. However, this only serves to make selected images and corresponding images easier to recognize and has no further restrictive significance.

In the process shown in Fig. 2, the 2D images Iⁿ1, Iⁿ2, Iⁿ3, Iⁿ4, Iⁿ 5, Iⁿ6, Iⁿ7 are fed to the trained machine learning model MLM^{t} one after the other in a pre-defined sequence (from top to bottom).

Fig. 2 only shows the sequence of the 2D images Iⁿ1, Iⁿ2, Iⁿ3. The other 2D images follow in the sequence Iⁿ4, Iⁿ5, Iⁿ6, Iⁿ7.

First, the slice represented by the 2D image Iⁿ1 is selected and the image Iⁿ1 is fed to the trained machine learning model MLM^{t}. The trained machine learning model MLM^{t} generates the synthetic image SIⁿ1. The synthetic image SIⁿ1 represents the same slice of the examination region of the examination object as the image Iⁿ1; Iⁿ1 and SIⁿ1 correspond with each other.

Second, the slice represented by the 2D image Iⁿ2 is selected and the image Iⁿ2 is fed to the trained machine learning model MLM^{t}. The trained machine learning model MLM^{t} generates the synthetic image SIⁿ2. The synthetic image SIⁿ2 represents the same slice of the examination region of the examination object as the image Iⁿ2; Iⁿ2 and SIⁿ2 correspond with each other.

Third, the slice represented by the 2D image Iⁿ3 is selected and the image Iⁿ3 is fed to the trained machine learning model MLM^{t}. The trained machine learning model MLM^{t} generates the synthetic image SIⁿ3. The synthetic image SIⁿ3 represents the same slice of the examination region of the examination object as the image Iⁿ3; Iⁿ3 and SIⁿ3 correspond with each other.

And so on.

Once a synthetic 2D image has been generated for each of the 2D images using the trained machine learning model MLM^{t}, the synthetic 2D images can be output, e.g., individually and/or as the stack Sⁿ_{SI} or in the form of a synthetic 3D image that can be generated based on the stack Sⁿ_{SI}.

It should be noted that in the example shown in Fig. 2, fewer images are fed to the trained machine learning model than in the training method shown in Fig. 1. This flexibility is an advantage of the machine learning model of the present disclosure.

In the methods shown in Fig. 1 and Fig. 2, one synthetic image is generated on the basis of one image.

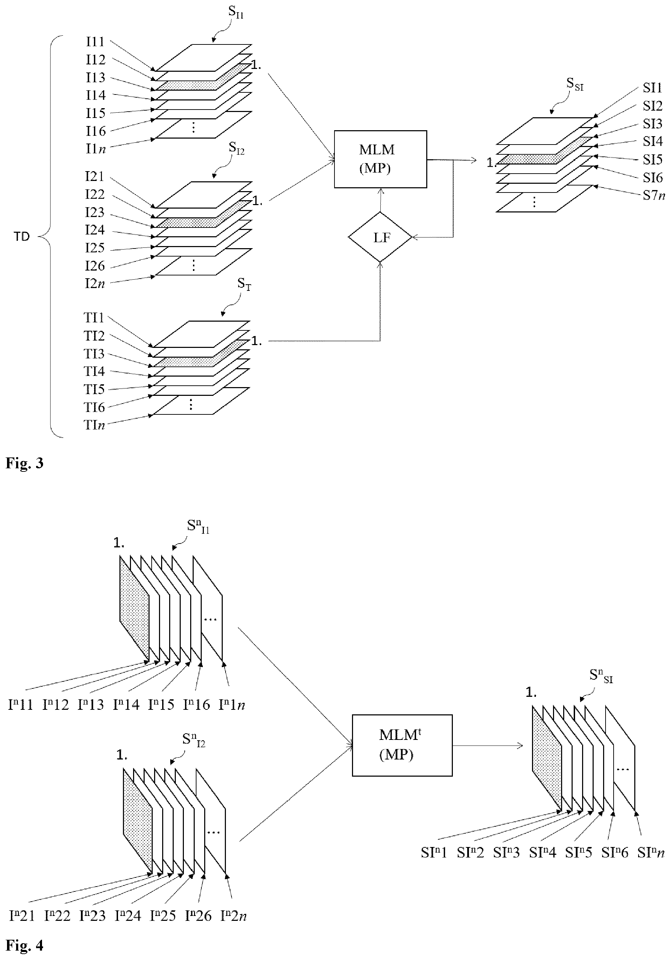

As described, it is possible to generate a synthetic image based on several images. This is shown schematically as an example in Fig. 3 and Fig. 4.

Fig. 3 shows another exemplary and schematic embodiment of the computer-implemented method for training a machine learning model.

The machine learning model MLM shown in Fig. 3 is trained on training data TD. The training data TD comprises, for each examination object of a plurality of examination objects, (i) input data and (ii) target data.

In the example shown in Fig. 3, only one data set of one examination object is shown. This data set comprises a (i) first stack (Sn) of 2D images and a second stack (S_{I2}) of 2D images as input data, and (ii) a stack (S_{T}) of 2D target images as target data.

Each stack (Sn, S_{I2}, S_{T}) represents the same 3D examination region of the examination object.

In Fig. 3, one image is marked with hatching. However, this only serves to make selected images and corresponding images easier to recognize and has no further restrictive significance.

The first stack S_{I1} of the input data comprises a number n of 2D images (I11, I12, I13, I14, I15, I16, ..., *11n).* Each image of the multitude of 2D images represents a slice of the 3D examination region of the examination object.

The second stack S_{I2} of the input data also comprises a number n of 2D images (I21, I22, I23, I24, I25, I26, ..., I2*n*). Each image of the multitude of 2D images represents a slice of the 3D examination region of the examination object.

The stack S_{T} of the target data comprises a number n of 2D target images (TI1, TI2, TI3, TI4, TI5, TI6, ..., TI*n*). Each image of the multitude of 2D target images represents a slice of the 3D examination region of the examination object.

The slices of the first input data stack S_{I}, the slides of the second input data stack S₂ and the slices of the target data stack S_{T} correspond with each other: The slice represented by I11 corresponds with the slice represented by I21 and with the slice represented by T1, the slice represented by I12 corresponds with the slice represented by I22 and with the slice represented by TI2, the slice represented by I13 corresponds with the slice represented by I23 and with the slice represented by TI3, the slice represented by I14 corresponds with the slice represented by I24 and with the slice represented by TI4, the slice represented by I15 corresponds with the slice represented by I25 and with the slice represented by TI5, the slice represented by I16 corresponds with the slice represented by I26 and with the slice represented by TI6, ..., the slice represented by I1*n* corresponds with the slice represented by I2*n* and with the slice represented by TI*n*.

Corresponding slices represent the same part of the examination region of the examination object, but preferably in a different state and/or at a different time and/or under different measurement conditions and/or as a result of a different measurement method and/or different measurement parameters.

Likewise: I11 corresponds with I21 and T1, I12 corresponds with I22 and TI2, I13 corresponds with I23 and TI3, I14 corresponds with I24 and TI4, I15 corresponds with I25 and TI5, I16 corresponds with I26 and TI6, ..., I1*n* corresponds with I2*n* and TI*n*. Corresponding images represent the same slice of the examination region of the examination object, but preferably in a different state and/or at a different time and/or under different measurement conditions and/or as a result of a different measurement method and/or different measurement parameters.

Corresponding images represent the same slice of the examination region of the examination object, but preferably in a different state and/or at a different time and/or under different measurement conditions and/or as a result of a different measurement method and/or different measurement parameters.

In a first step, a first slice of the 3D examination region is selected at random (i.e., slices are selected unordered).

In the example shown in Fig. 3, the slice represented by the 2D image I13 in the stack S_{I1}, by 2D image I23 in the stack S_{I2}, and by the 2D target image TI3 in the stack S_{T} is selected first.

All 2D images of the input data representing the selected slice are fed into the machine learning model MLM; in the example shown in Fig. 3, these are the images I13 and I23.

The machine learning model MLM is configured to generate a synthetic 2D image based on the input data and parameters MP of the machine learning model MLM. So, the machine learning model MLM generates the synthetic 2D image SI3 based on the 2D images I13 and I23 and based on model parameters MP. The synthetic 2D image SI3 represents the same slice of the 3D examination region of the examination object as the 2D images I13 and I23 and the corresponding 2D target image TI3.

In a further step, the synthetic 2D image SI3 and the 2D target image T3 are compared. A loss function LF is used to quantify deviations between the synthetic 2D image SI3 and the 2D target image TI3. Model parameters MP are modified in an optimization procedure to reduce the deviations.

In a further step, a second slice is selected at random. This is no longer shown in Fig. 3. The further procedure is analogous to the procedure described in Fig. 1, with the difference that a synthetic 2D image is based on two corresponding images of the input data instead of one.

Of course, two is not the highest number of corresponding input 2D images on the basis of which a synthetic 2D image can be generated. The number of corresponding 2D images on the basis of which a synthetic 2D image can be generated can be 3 or 4 or 5 or 6 or 7 or 8 or more than 8.

After the training has been carried out with the training data TD shown in Fig. 3, it can be continued with the training data of another examination object.

Once the machine learning model has been trained on the basis of training data from a plurality of examination objects, the trained machine learning model can be used to generate one or more synthetic images of a new examination object. This is shown schematically as an example in Fig. 4.

Fig. 4 shows another exemplary and schematic embodiment of the computer-implemented method for generating one or more synthetic images using a trained machine learning model.

The trained machine learning model MLM^{t} shown in Fig. 4 may have been trained in a process described with respect to Fig. 3.

While the slices and the 2D images representing the slices are arranged horizontally in the example shown in Fig. 3, the slices and the 2D images representing them are arranged vertically in the example shown in Fig. 4. This is to illustrate that the machine learning model of the present disclosure can be trained to process 2D images of differently arranged and oriented slices.

The trained machine learning model MLM^{t} is fed with 2D images of a new examination object as input data. There are two stacks (Sⁿ_{I1}, Sⁿ_{I2}) with 2D images as input data. The first stack Sⁿ_{I1} contains the 2D images Iⁿ11, Iⁿ12, Iⁿ13, Iⁿ14, Iⁿ15, Iⁿ16, ..., Iⁿ1*n*. The second stack Sⁿ_{I2} contains the 2D images Iⁿ21, Iⁿ22, Iⁿ23, Iⁿ24, Iⁿ25, Iⁿ26, ..., Iⁿ2*n*.

For each 2D image in the first stack Sⁿ_{I1}, there is a corresponding 2D image in the second stack Sⁿ₁₂ (and *vice versa).* Iⁿ11 corresponds with Iⁿ21, Iⁿ12 corresponds with Iⁿ22, Fⁿ13 corresponds with Iⁿ23, Fⁿ14 corresponds with Iⁿ24, Iⁿ15 corresponds with Iⁿ25, Iⁿ16 corresponds with Iⁿ26, Iⁿ1*n* corresponds with Iⁿ2*n*. Corresponding images represent the same slice of the examination region of the examination object, but preferably in a different state and/or at a different time and/or under different measurement conditions and/or as a result of a different measurement method and/or different measurement parameters.

In Fig. 4, some images are marked with hatching. However, this only serves to make selected images and corresponding images easier to recognize and has no further restrictive significance.

In the process shown in Fig. 4, a first slice is selected. The slice selected first is the one represented by the 2D images Iⁿ11 and Iⁿ21. The 2D images Iⁿ11 and Iⁿ21 representing the selected slide are fed to the trained machine learning model MLM^{t}.

The trained machine learning model MLM^{t} generates the synthetic 2D image SIⁿ1. The synthetic 2D image SIⁿ1 represents the same slice of the examination region of the examination object as the 2D images Iⁿ11 and Iⁿ21. SIⁿ1 corresponds Iⁿ11 and Iⁿ21.

In a next step, another slice can be selected and the 2D images representing the slice can be fed into the trained machine learning model to generate another synthetic 2D image that also represents the slice. This is not explicitly shown in Fig. 4. In the example shown in Fig. 4, the slices can be selected in a predefined order (e.g., from left to right).

All generated synthetic 2D images can be output, stored and/or transmitted to a separate computer system individually and/or in the form of a stack (because, for example, in the form of the stack Sⁿ_{SI}) and/or in the form of a synthetic 3D image that can be generated based on the stack Sⁿ_{SI}.

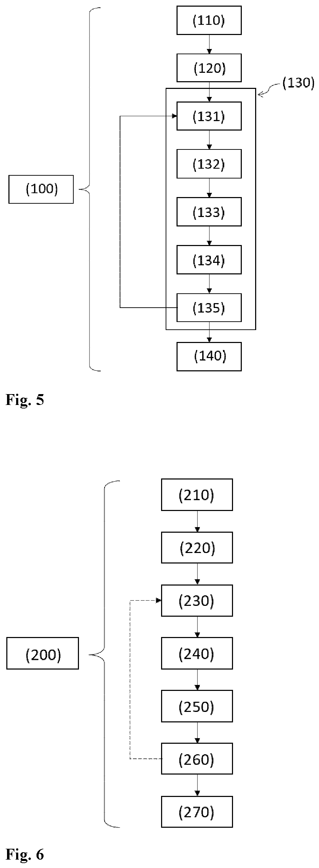

Fig. 5 shows schematically in the form of a flow chart a preferred embodiment of the computer-implemented method for training the machine learning model of the present disclosure.

The training method (100) comprises the steps.
(110) providing a machine learning model, wherein the machine learning model is configured to generate a synthetic 2D image based on input data and parameters of the machine learning model,
(120) providing training data, wherein the training data comprises, for each examination object of a plurality of examination objects, (i) input data and (ii) target data,
   ∘ wherein the input data comprises one or more stacks of 2D images, wherein each stack represents a 3D examination region of the examination object, wherein each 2D image represents a slice of the 3D examination region,
   ∘ wherein the target data comprises a stack of 2D target images, wherein the stack represents the 3D examination region of the examination object, wherein each 2D target image represents a slice of the 3D examination region,
(130) training the machine learning model, wherein the training comprises, for each examination object of the plurality of examination objects:
   (131) unordered selecting a slice of the 3D examination region,
   (132) inputting the 2D images of the input data representing the selected slice into the machine learning model,
   (133) receiving a synthetic 2D image representing the selected slice as an output of the machine learning model,
   (134) reducing deviations between the synthetic 2D image and the 2D target image representing the selected slice by modifying model parameters,
   (135) repeating steps (131) to (134) until synthetic 2D images have been generated for a predefined portion of the 3D examination region,
(140) outputting and/or storing the trained machine learning model and/or transferring the trained machine learning model to a separate computer and/or using the trained machine learning model to generate one or more synthetic medical images of one or more new examination objects.

Fig. 6 shows schematically in the form of a flow chart a preferred embodiment of the computer-implemented method for generating one or more synthetic 2D images.

The inference method (200) comprises the steps.
(210) providing a trained machine learning model,
   - wherein the trained machine learning model is configured and was trained on training data to generate a synthetic 2D image based on input data and parameters of the machine learning model,
   - wherein the training data included, for each examination object of a plurality of examination objects, (i) input data and (ii) target data,
   - wherein the input data included one or more stacks of 2D images, wherein each stack represents a 3D examination region of the examination object, wherein each 2D image represents a slice of the 3D examination region,
   - wherein the target data included a stack of 2D target images, wherein the stack represents the 3D examination region of the examination object, wherein each 2D target image represents a slice of the 3D examination region,
   - wherein the training of the machine learning model included, for each examination object of the plurality of examination objects:
      ∘ unordered selecting a slice of the 3D examination region,
      ∘ inputting the 2D images of the input data representing the selected slice into the machine learning model,
      ∘ receiving a synthetic 2D image representing the selected slice as an output of the machine learning model,
      ∘ reducing deviations between the synthetic 2D image and the 2D target image representing the selected slice by modifying model parameters,
      ∘ repeating steps (131) to (134) until synthetic 2D images have been generated for a predefined portion of the 3D examination region,
(220) receiving new input data, wherein the new input data comprises one or more stacks of new 2D images, wherein each stack represents at least a portion of the 3D examination region of a new examination object, wherein each new 2D image represents a slice of the 3D examination region,
(230) selecting a slice of the 3D examination region of the new examination object,
(240) inputting the new 2D images representing the selected slice into the trained machine learning model,
(250) receiving a synthetic 2D image representing the selected slice of the 3D examination region of the new examination object as an output from the trained machine learning model,
(260) optionally repeating steps (230) to (250) until synthetic 2D images have been generated for a pre-defined portion of the 3D examination region of the new examination object,
(270) outputting and/or storing one or more synthetic 2D images representing at least a portion of the 3D examination region of the new examination object and/or transmitting one or more synthetic 2D images representing at least a portion of the 3D examination region of the new examination object to a separate computer system.

The procedures described herein may be performed in whole or in part using a computer system.

A "computer system" is an electronic data processing system that processes data by means of programmable calculation rules. Such a system typically comprises a "computer", which is the unit that includes a processor for carrying out logic operations, and peripherals.

In computer technology, "peripherals" refers to all devices that are connected to the computer and are used for control of the computer and/or as input and output devices. Examples thereof are monitor (screen), printer, scanner, mouse, keyboard, drives, camera, microphone, speakers, etc. Internal ports and expansion cards are also regarded as peripherals in computer technology.

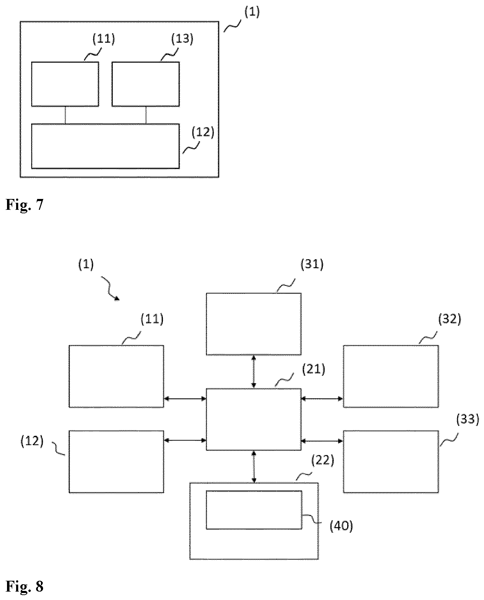

Fig. 7 shows by way of example and in schematic form a computer system according to the present disclosure.

The computer system (1) shown in Fig. 7 comprises a receiving unit (11), a control and calculation unit (12) and an output unit (13).

The control and calculation unit (12) serves for control of the computer system (1), coordination of the data flows between the units of the computer system (1), and for the performance of calculations.

The control and calculation unit (12) is configured:
- to provide a trained machine learning model, wherein the trained machine learning model is configured and trained to generate one or more synthetic image based on input data,
- to cause the receiving unit (11) to receive input data,
- to input the input data into the trained machine learning model,
- to receive one or more synthetic image as an output of the trained machine learning model,
- to cause the output unit (13) to output and/or store one or more synthetic images and/or to transmit the synthetic image to a separate computer system.

Fig. 8 shows by way of example and in schematic form a further embodiment of the computer system. The computer system (1) comprises a processing unit (21) connected to a storage medium (22). The processing unit (21) and the storage medium (22) form a control and calculation unit, as shown in Fig. 7.

The processing unit (21) may comprise one or more processors alone or in combination with one or more storage media. The processing unit (21) may be customary computer hardware that is able to process information such as digital images, computer programs and/or other digital information. The processing unit (21) usually consists of an arrangement of electronic circuits, some of which can be designed as an integrated circuit or as a plurality of integrated circuits connected to one another (an integrated circuit is sometimes also referred to as a "chip"). The processing unit (21) may be configured to execute computer programs that can be stored in a working memory of the processing unit (21) or in the storage medium (22) of the same or of a different computer system.

The storage medium (22) may be customary computer hardware that is able to store information such as digital images (for example representations of the examination region), data, computer programs and/or other digital information either temporarily and/or permanently. The storage medium (22) may comprise a volatile and/or non-volatile storage medium and may be fixed in place or removable. Examples of suitable storage media are RAM (random access memory), ROM (read-only memory), a hard disk, a flash memory, an exchangeable computer floppy disk, an optical disc, a magnetic tape or a combination of the aforementioned. Optical discs can include compact discs with read-only memory (CD-ROM), compact discs with read/write function (CD-R/W), DVDs, Blu-ray discs and the like.

The processing unit (21) may be connected not just to the storage medium (22), but also to one or more interfaces (11, 12, 31, 32, 33) in order to display, transmit and/or receive information. The interfaces may comprise one or more communication interfaces (11, 32, 33) and/or one or more user interfaces (12, 31). The one or more communication interfaces may be configured to send and/or receive information, for example to and/or from an MRI scanner, a CT scanner, an ultrasound camera, other computer systems, networks, data storage media or the like. The one or more communication interfaces may be configured to transmit and/or receive information via physical (wired) and/or wireless communication connections. The one or more communication interfaces may comprise one or more interfaces for connection to a network, for example using technologies such as mobile telephone, wifi, satellite, cable, DSL, optical fibre and/or the like. In some examples, the one or more communication interfaces may comprise one or more close-range communication interfaces configured to connect devices having close-range communication technologies such as NFC, RFID, Bluetooth, Bluetooth LE, ZigBee, infrared (e.g. IrDA) or the like.

The user interfaces may include a display (31). A display (31) may be configured to display information to a user. Suitable examples thereof are a liquid crystal display (LCD), a light-emitting diode display (LED), a plasma display panel (PDP) or the like. The user input interface(s) (11, 12) may be wired or wireless and may be configured to receive information from a user in the computer system (1), for example for processing, storage and/or display. Suitable examples of user input interfaces are a microphone, an image- or video-recording device (for example a camera), a keyboard or a keypad, a joystick, a touch-sensitive surface (separate from a touchscreen or integrated therein) or the like. In some examples, the user interfaces may contain an automatic identification and data capture technology (AIDC) for machine-readable information. This can include barcodes, radiofrequency identification (RFID), magnetic strips, optical character recognition (OCR), integrated circuit cards (ICC) and the like. The user interfaces may in addition comprise one or more interfaces for communication with peripherals such as printers and the like.

One or more computer programs (40) may be stored in the storage medium (22) and executed by the processing unit (21), which is thereby programmed to fulfil the functions described in this description. The retrieving, loading and execution of instructions of the computer program (40) may take place sequentially, such that an instruction is respectively retrieved, loaded and executed. However, the retrieving, loading and/or execution may also take place in parallel.

The computer system of the present disclosure may be designed as a laptop, notebook, netbook and/or tablet PC; it may also be a component of an MRI scanner, a CT scanner or an ultrasound diagnostic device.

## Claims

1. A computer-implemented method of training a machine learning model to generate synthetic images, the method comprising:
- providing a machine learning model, wherein the machine learning model is configured to generate a synthetic 2D image based on input data and parameters of the machine learning model,
- providing training data, wherein the training data comprises, for each examination object of a plurality of examination objects, (i) input data and (ii) target data,
∘ wherein the input data comprises one or more stacks of 2D images, wherein each stack represents a 3D examination region of the examination object, wherein each 2D image represents a slice of the 3D examination region,
∘ wherein the target data comprises a stack of 2D target images, wherein the stack represents the 3D examination region of the examination object, wherein each 2D target image represents a slice of the 3D examination region,
- training the machine learning model, wherein the training comprises, for each examination object of the plurality of examination objects:
∘ unordered selecting a slice of the 3D examination region,
∘ inputting the 2D images of the input data representing the selected slice into the machine learning model,
∘ receiving a synthetic 2D image representing the selected slice as an output of the machine learning model,
∘ reducing deviations between the synthetic 2D image and the 2D target image representing the selected slice by modifying model parameters,
∘ repeating the above training steps until synthetic 2D images have been generated for a pre-defined portion of the 3D examination region,
- outputting and/or storing the trained machine learning model and/or transferring the trained machine learning model to a separate computer and/or using the trained machine learning model to generate one or more synthetic medical images of one or more new examination objects.

2. The method of claim 1, further comprising:
(a) receiving new input data, wherein the new input data comprises one or more stacks of new 2D images, wherein each stack represents at least a portion of the 3D examination region of a new examination object, wherein each new 2D image represents a slice of the 3D examination region of the new examination object,
(b) selecting a slice of the 3D examination region of the new examination object,
(c) inputting the new 2D images representing the selected slice into the trained machine learning model,
(e) receiving a synthetic 2D image representing the selected slice of the 3D examination region of the new examination object as an output from the trained machine learning model,
(f) optionally repeating steps (a) to (b) until synthetic 2D images have been generated for a pre-defined portion of the 3D examination region of the new examination object,
(g) outputting and/or storing one or more synthetic 2D images representing at least a portion of the 3D examination region of the new examination object and/or transmitting one or more synthetic 2D images representing at least a portion of the 3D examination region of the new examination object to a separate computer system.

3. The method of any one of claims 1 or 2, wherein each examination object is a living being, preferably a human, and the examination region is a part of the examination object.

4. The method of any one of claims 1 to 3, wherein the examination region is or comprises a liver, kidney, heart, lung, brain, stomach, bladder, prostate, intestine, thyroid, eye, breast or a part of said parts or another part of the body of a mammal, preferably a human.

5. The method of any one of claims 1 to 4, wherein the 2D images of the input data and the 2D target images are measured medical images and the synthetic 2D images are synthetic medical images.

6. The method of any one of claims 1 to 5, wherein the 2D images of the input data and the 2D target images are measured radiological images and the synthetic 2D images are synthetic radiological images.

7. The method of any one of claims 2 to 6, wherein step (f) of claim 2 comprises:
- repeating steps (a) to (b) until synthetic 2D images have been generated for a pre-defined portion of the 3D examination region of the new examination object, wherein the slices are selected in a pre-defined sequence.

8. The method of any one of claims 1 to 7, wherein the number of 2D images and 2D target images is not the same for all examination objects.

9. The method of any one of claims 1 to 8, wherein the size of the examination region is not the same for all examination objects.

10. The method of any one of claims 1 to 9, wherein the orientation of the slices is not the same for all examination objects.

11. The method of any one of claims 1 to 10, wherein the input data comprises, for each examination object of the plurality of examination objects, one or more stacks comprising one or more radiologic images, wherein the one or more stacks represent the examination region of the examination object before and/or after application of a first amount of a contrast agent, wherein the target data comprises one stack of one or more radiologic images, wherein the stack represents the examination region of the examination object after application of a second amount of a contrast agent, wherein the second amount differs from the first amount.

12. The method of any one of claims 1 to 11, wherein the input data comprises, for each examination object of the plurality of examination objects, a first stack and a second stack, wherein the target data comprises a third stack, wherein the first stack represents the examination region of the examination object without contrast agent, wherein the second stack represents the examination region of the examination object after application of a first amount of a contrast agent, wherein the third stack represents the examination region of the examination object after application of a second amount of a contrast agent, wherein the second amount differs from the first amount.

13. The method of any one of claims 1 to 12, wherein the input data comprises, for each examination object of the plurality of examination objects, one or more stacks comprising one or more radiologic images, wherein the one or more stacks represent the examination region of the examination object at one or more points in time before or after application of a contrast agent, wherein the target data comprise one stack comprising one or more images, wherein the stack represents the examination region of the examination object at another point in time before or after application of the contrast agent.

14. The method of any one of claims 1 to 13, wherein the input data comprises, for each examination object of the plurality of examination objects, one or more first stacks, wherein the target data comprises a second stack, wherein the one or more first stacks represent the examination region of the examination object in a native phase, arterial phase, portal venous phase and/or transitional phase before and/or after application of a hepatobiliary contrast agent, wherein the second stack represents the examination region of the examination object in a hepatobiliary phase after application of the hepatobiliary contrast agent.

15. The method of any one of claims 1 to 14, wherein the input data comprises, for each examination object of the plurality of examination objects, a first stack and one or more second stacks, wherein the target data comprises a third stack, wherein first stack represents the examination region of the examination object without a contrast agent, wherein the one or more second stacks represent the examination region of the examination object in a an arterial phase, portal venous phase and/or transitional phase after application of a hepatobiliary contrast agent, wherein the third stack represents the examination region of the examination object in a hepatobiliary phase after application of the hepatobiliary contrast agent.

16. The method of any one of claims 1 to 15, wherein the input data comprises, for each examination object of the plurality of examination objects, one or more first stacks representing the examination region of the examination object in a radiologic examination using a first radiation dose, wherein the target data comprises a second stack representing the examination region of the examination object in a radiologic examination using a second radiation dose, wherein the second radiation dose differs from the first radiation dose.

17. The method of any one of claims 1 to 16, wherein the input data comprises, for each examination object of the plurality of examination objects, one or more stacks comprising radiologic images of a first modality, wherein the target data comprises one stack comprising radiologic images of a second modality.

18. The method of any one of claims 1 to 17 comprising:
(a) providing a trained machine learning model,
- wherein the trained machine learning model is configured and was trained on training data to generate a synthetic 2D image based on input data and parameters of the machine learning model,
- wherein the training data included, for each examination object of a plurality of examination objects, (i) input data and (ii) target data,
- wherein the input data included one or more stacks of 2D images, wherein each stack represents a 3D examination region of the examination object, wherein each 2D image represents a slice of the 3D examination region,
- wherein the target data included a stack of 2D target images, wherein the stack represents the 3D examination region of the examination object, wherein each 2D target image represents a slice of the 3D examination region,
- wherein the training of the machine learning model included, for each examination object of the plurality of examination objects:
∘ unordered selecting a slice of the 3D examination region,
∘ inputting the 2D images of the input data representing the selected slice into the machine learning model,
∘ receiving a synthetic 2D image representing the selected slice as an output of the machine learning model,
∘ reducing deviations between the synthetic 2D image and the 2D target image representing the selected slice by modifying model parameters,
∘ repeating steps (131) to (134) until synthetic 2D images have been generated for a predefined portion of the 3D examination region,
(b) receiving new input data, wherein the new input data comprises one or more stacks of new 2D images, wherein each stack represents at least a portion of the 3D examination region of a new examination object, wherein each new 2D image represents a slice of the 3D examination region,
(c) selecting a slice of the 3D examination region of the new examination object,
(d) inputting the new 2D images representing the selected slice into the trained machine learning model,
(e) receiving a synthetic 2D image representing the selected slice of the 3D examination region of the new examination object as an output from the trained machine learning model,
(f) optionally repeating steps (c) to (e) until synthetic 2D images have been generated for a predefined portion of the 3D examination region of the new examination object,
(g) outputting and/or storing one or more synthetic 2D images representing at least a portion of the 3D examination region of the new examination object and/or transmitting one or more synthetic 2D images representing at least a portion of the 3D examination region of the new examination object to a separate computer system.

19. A computer system comprising:
a processor; and
a storage medium that stores an application program configured to perform an operation when executed by the processor, said operation comprising the steps of:
- providing a machine learning model, wherein the machine learning model is configured to generate a synthetic 2D image based on input data and parameters of the machine learning model,
- providing training data, wherein the training data comprises, for each examination object of a plurality of examination objects, (i) input data and (ii) target data,
∘ wherein the input data comprises one or more stacks of 2D images, wherein each stack represents a 3D examination region of the examination object, wherein each 2D image represents a slice of the 3D examination region,
∘ wherein the target data comprises a stack of 2D target images, wherein the stack represents the 3D examination region of the examination object, wherein each 2D target image represents a slice of the 3D examination region,
- training the machine learning model, wherein the training comprises, for each examination object of the plurality of examination objects:
∘ unordered selecting a slice of the 3D examination region,
∘ inputting the 2D images of the input data representing the selected slice into the machine learning model,
∘ receiving a synthetic 2D image representing the selected slice as an output of the machine learning model,
∘ reducing deviations between the synthetic 2D image and the 2D target image representing the selected slice by modifying model parameters,
∘ repeating the above training steps until synthetic 2D images have been generated for a pre-defined portion of the 3D examination region,
- outputting and/or storing the trained machine learning model and/or transferring the trained machine learning model to a separate computer and/or using the trained machine learning model to generate one or more synthetic medical images of one or more new examination objects.

20. A non-transitory computer readable storage medium having stored thereon software instructions that, when executed by a processor of a computer system, cause the computer system to execute the following steps:
- providing a machine learning model, wherein the machine learning model is configured to generate a synthetic 2D image based on input data and parameters of the machine learning model,
- providing training data, wherein the training data comprises, for each examination object of a plurality of examination objects, (i) input data and (ii) target data,
∘ wherein the input data comprises one or more stacks of 2D images, wherein each stack represents a 3D examination region of the examination object, wherein each 2D image represents a slice of the 3D examination region,
∘ wherein the target data comprises a stack of 2D target images, wherein the stack represents the 3D examination region of the examination object, wherein each 2D target image represents a slice of the 3D examination region,
- training the machine learning model, wherein the training comprises, for each examination object of the plurality of examination objects:
∘ unordered selecting a slice of the 3D examination region,
∘ inputting the 2D images of the input data representing the selected slice into the machine learning model,
∘ receiving a synthetic 2D image representing the selected slice as an output of the machine learning model,
∘ reducing deviations between the synthetic 2D image and the 2D target image representing the selected slice by modifying model parameters,
∘ repeating the above training steps until synthetic 2D images have been generated for a pre-defined portion of the 3D examination region,
- outputting and/or storing the trained machine learning model and/or transferring the trained machine learning model to a separate computer and/or using the trained machine learning model to generate one or more synthetic medical images of one or more new examination objects.
